# EUROPÄISCHE PATENTSCHRIFT

(11) **EP 0 769 425 B1**
(45) Veröffentlichungstag und Bekanntmachung des Hinweises auf die Patenterteilung: **18.12.2002**
(21) Anmeldenummer: 96116457.1
(22) Anmeldetag: 15.10.1996
(51) Int. Cl.: B60R 21/20

(54) **Trogartiges Airbag-Gehäuse**
Trough-shaped air bag canister
Boîtier de sac gonflable en forme d'auge

(30) Priorität: 19.10.1995 DE 19538870
(43) Veröffentlichungstag der Anmeldung: 23.04.1997
(73) Patentinhaber: TRW Automotive Safety Systems GmbH & Co. KG, 63743 Aschaffenburg (DE)
(72) Erfinder: Bohn, Stefan, 63773 Goldbach (DE)
(74) Vertreter: Degwert, Hartmut, Dipl.-Phys.

(56) Entgegenhaltungen:
- WO-A-93/08042
- DE-A- 4 338 666
- FR-A- 1 257 475
- "AIR BAG REACTION CANISTER" RESEARCH DISCLOSURE, Nr. 383, 1. März 1996, Seiten 222-224, XP000581363
- KLENK J ET AL: "AIRBAG-HYBRIDTECHNIK IM NEUEN OPEL VECTRA" ATZ AUTOMOBILTECHNISCHE ZEITSCHRIFT, Bd. 98, Nr. 9, 1. September 1996, Seiten 438-443, XP000627477

## Beschreibung

Die Erfindung betrifft ein trogartiges, im Formgießverfahren hergestelltes Gehäuse mit in Längserstreckung gleichbleibendem U-förmigen Querschnitt und stirnseitigen, flachen Seitenwänden zur Aufnahme eines Gasgenerators und eines Luftsacks für eine Beifahrer-Schutzeinrichtung in einem Kraftfahrzeug, mit zwei im wesentlichen spiegelbildlich ausgebildeten Halbschalen mit einstückig angeformten Seitenwandhälften.

In zunehmendem Maße werden von den Automobilherstellern Airbags auch für den Beifahrer als Sonderausstattung angeboten oder gar serienmäßig vorgesehen. Dabei ist man bestrebt, solche Airbag-Module möglichst preiswert herzustellen, um dem Kunden die zusätzliche Sicherheit möglichst kostengünstig anbieten zu können. Dazu werden alle Elemente des Airbag-Moduls kritisch analysiert und auf Einsparmöglichkeiten untersucht. Bei einem Gehäuse können Einsparungen insbesondere dadurch realisiert werden, daß man diese nicht mehr an die vorgegebenen u.U. engen und verwinkelten Einbauverhältnisse anpaßt, sondern umgekehrt die betroffenen Bereiche der Kraftfahrzeugkarosserie, insbesondere im Armaturenbrett, bereits serienmäßig für den Einbau eines Airbags ausgestaltet. Damit wird die Möglichkeit eröffnet, einheitliche Gehäuse für eine Vielzahl von Anwendungsfällen zu schaffen und die Fertigungsvorteile bei der Herstellung großer Stückzahlen zu nutzen.

Aus der DE 43 38 666 A1 ist ein Airbag-Gehäuse der eingangs genannten Art bekannt, bei dem konstruktiv auf eine bestimmte Einbausituation abgestellte Befestigungselemente einstückig angeformt sind. Außerdem soll das gesamte Airbag-Gehäuse durch Spritzgießen in einem Stück hergestellt werden. Das bedingt eine sehr komplizierte Gießform, die zudem nur für einen bestimmten Anwendungsfall brauchbar ist und die noch weitgehend von dem Gedanken bestimmt ist, daß das Airbag-Gehäuse an eine konkret vorgegebene Einbausituation angepaßt werden muß. Eine besonders kostengünstige Beifahrer-Schutzvorrichtung kann auf diesem Wege nicht realisiert und angeboten werden.

Aus der WO-A-930 8042 ist eine Anordnung zur Aufnahme eines Airbags und eines Gasgenerators bekannt, die ein Gehäuse aufweist, das aus zwei Halbschalen mit einstückig angeformten Seitenwandhälften gebildet ist. Es sind verschiedenste Mittel zum Befestigen der beiden Halbschalen vorgesehen. So können die Halbschalen beispielsweise mittels Schraubverbindungen an einem im Umfangsbereich angebrachten Flansch verbunden werden, oder über an den Halbschalen angeformte Bolzen und Haken und dazu komplementäre Ausnehmungen und Bohrungen.

Aus der FR-A-1257 475 ist eine Dichtung bekannt, mittels derer zwei Bauteile beliebiger Form dicht verbunden werden können. Die Bauteile werden an Flanschen von der Dichtung, die aus einem elastischen Material gebildet ist, umschlossen.

Der Erfindung liegt die Aufgabe zugrunde, ein Gehäuse der eingangs genannten Art vorzuschlagen, das unter Berücksichtigung der genannten Gesichtspunkte möglichst einfach und preiswert herstellbar ist und das möglichst leicht ist, ohne daß Funktionsnachteile in Kauf zu nehmen sind.

Zur Lösung dieser Aufgabe sind erfindungsgemäß die Halbschalen über an den Seitenwandhälften angebrachte Befestigungsbleche miteinander verbunden, die gleichzeitig zur Befestigung des Gehäuses in der Fahrzeugkarosserie dienen. Ferner sind weitere Mittel zum Verbinden der beiden Halbschalen vorgesehen.

Der Erfindung liegt die Erwägung zugrunde, ein Airbag-Gehäuse aus möglichst wenig Einzelteilen zu schaffen, das aufgrund seines Herstellungsverfahrens einerseits hinsichtlich seiner Formgebung flexibel gestaltet werden kann, andererseits aber auch für eine moderne Serienfertigung geeignet ist.

Das vorgeschlagene Gehäuse besteht - abgesehen von den Verbindungsmitteln - aus nur zwei Bauteilen, für die sämtliche Werkstoffe ausgewählt werden können, die dem Formgießverfahren zugänglich sind. Insbesondere kommen Aluminiumdruckgußlegierungen und Kunststoffe in Betracht. Bei der Verwendung von Kunststoffen wird zweckmäßigerweise eine Doppelform verwendet, in der die beiden Halbschalen gleichzeitig hergestellt werden können und mit der man im Bereich der bodenseitigen Fügungsfläche ein Filmscharnier ausbilden kann, so daß zusammengehörige Halbschalen von vornherein lose miteinander verbunden sind. Dies hat den Vorteil, daß nur Halbschalen zusammengefügt werden, die aus der gleichen Werkstoffcharge stammen.

Wegen der Freiheit bei der Formgestaltung ist es ohne weiteres möglich, daß die Seitenwandhälften Aussparungen für die Halterung eines zylindrischen Gasgenerators aufweisen. Ferner ist es ohne weiteres möglich, daß die Halbschalen einen im Querschnitt viertelkreisförmigen Bodenbereich aufweisen und damit optimal an den zylindrischen Gasgenerator angepaßt werden können.

Im bodenseitigen Verbindungsbereich der Halbschalen sind zweckmäßigerweise nach außen vorstehende, im montierten Zustand aneinander anliegende Flansche angeformt. Diese erstrecken sich im wesentlichen nur parallel zur Teilungsebene des Gehäuses und sind für das Einsetzen selbstschneidender, beide Flansche durchdringender Schrauben ausgebildet.

Gemäß einer nicht in den Ansprüchen angegebenen Alternative kann man auch Flansche vorsehen, die einen sich im wesentlichen parallel zur Teilungsebene des Gehäuses erstreckenden Abschnitt sowie einen davon rechtwinklig nach außen abstehenden Abschnitt aufweisen und die mittels eines, die nach außen abstehenden Abschnitte übergreifenden, aufgeschobenen Klammerteils miteinander verbindbar sind. Dabei kann das Klammerteil sich über die gesamte Länge des Gehäuses erstrecken oder aus mehreren, über die Länge des Gehäuses verteilten Abschnitten bestehen.

Ein weiterer Vorteil des gewählten Herstellungsverfahrens besteht darin, daß die Wandungen der Halbschalen innen und/oder außen durch ein Raster von Rippen verstärkt werden können, wobei die Stärke und Verteilung der Rippen den am Gehäuse auftretenden, örtlichen Festigkeitsbeanspruchungen jeweils genau anpaßbar ist.

Zur genauen Positionierung der beiden Halbschalen zueinander sind in einer der Fügungsflächen zweckmäßigerweise vorspringende Zentrierungsnoppen und in der anderen Führungsfläche entsprechende Ausnehmungen vorgesehen.

Bei einer weiteren Ausgestaltung des Erfindungsgedankens ist vorgesehen, daß die Wandungen der Halbschalen innenseitig etwa auf halber Höhe einander gegenüberliegende schlitzartige, sich senkrecht zur Wandung und über die gesamte Länge des Gehäuses erstreckende Ausnehmungen aufweisen, in die die Seitenkanten eines Haltebleches für den Luftsack einsteckbar und ohne sonstige Mittel zu befestigen sind. Bei der Montage können Luftsack mit Halteblech und Gasgenerator in eine der beiden Halbschalen eingelegt und danach die andere Halbschale aufgesetzt werden. Durch die Ausnehmungen für das Halteblech und den Gasgenerator werden diese Bauteile innerhalb des Gehäuses durch einfaches Zusammenstecken positioniert und gehalten, ohne daß weitere Verbindungsmittel erforderlich sind. Die Ausnehmungen für das Halteblech werden zweckmäßigerweise von zwei nach innen vorstehenden, verlängerten Rippen gebildet, die durch senkrecht dazu angeordnete Rippen versteift sind. Auch für diese Ausgestaltung ist das benutzte Formgießverfahren bestens geeignet.

Am oberen Ende der Halbschalen können am gesamten Umfang noch Löcher für das Einsetzen selbstschneidender Schrauben zur Befestigung einer Abdeckung vorgesehen sein. Außerdem ist es vorteilhaft, wenn an den Seitenwandhälften mit Löchern versehene Nocken für das Einsetzen selbstschneidender Schrauben zum Anbringen der Befestigungsbleche vorgesehen sind.

Damit ist festzustellen, daß nach dem Grundgedanken der Erfindung ein trogartiges Airbag-Gehäuse geschaffen werden kann, das bei weitgehend freier Formgebung leicht an alle Vorgaben anpaßbar ist und sich gleichwohl für eine Klein- und Großserienfertigung eignet.

Weitere Einzelheiten werden anhand des in den Figuren 1 bis 3 dargestellten Ausführungsbeispiels näher erläutert. Es zeigen:
- Fig. 1: ein Ausführungsbeispiel in der Seitenansicht und im Längsschnitt,
- Fig. 2: einen Querschnitt des Ausführungsbeispiels gem. Fig. 1 und
- Fig. 3: einen Querschnitt des Ausführungsbeispiels gem. Fig. 1 mit einer Alternative zum Verbinden der beiden Halbschalen.

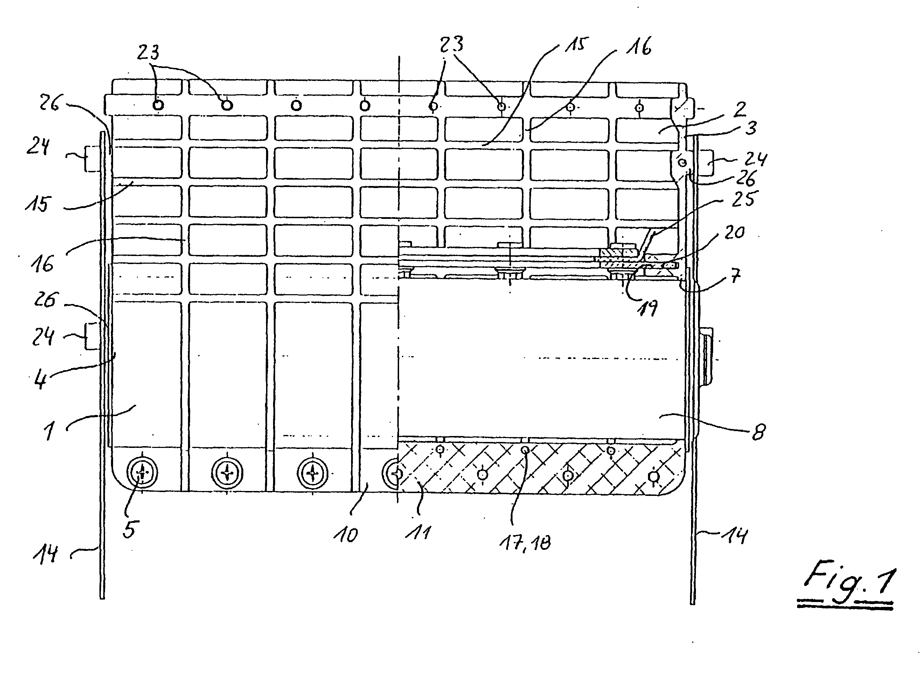

Das trogartige Gehäuse gem. Fig. 1 besteht aus einer vorderen Halbschale (1) und einer hinteren Halbschale (2) wobei man in der Darstellung links die äußere Seite der Halbschale (1) und rechts die innere Seite der Halbschale (2) sieht. Im Ausführungsbeispiel ist ein rechteckiges Raster aus Rippen (15, 16) realisiert und zwar sowohl auf der Außenseite (links) wie auch auf der Innenseite (rechts). Im unteren Bereich weisen die Halbschalen (1 und 2) je einen sich zur Fügungsfläche parallel erstreckenden Flansch (10 und 11) auf, wobei die Verbindung der beiden Halbschalen in diesem Bereich durch selbstschneidende Schrauben (5) hergestellt ist. Die stirnseitigen Seitenwandhälften (3 und 4) weisen Ausnehmungen (7) für die Halterung des Gasgenerators (8) auf. Aus Fig. 1 ist ferner ersichtlich, daß in der Fügungsfläche Zentriernoppen (17) bzw. entsprechende Ausnehmungen (18) vorgesehen sind. Außerdem ist am oberen Rand des Gehäuses eine Reihe von Löchern (23) vorgesehen, in die selbstschneidende Schrauben zum Befestigen einer Abdeckung eingesetzt werden können. An den stirnseitigen Seitenwandhälften (3 und 4) sind Nocken (26) angeformt, die ebenfalls Löcher zum Einsetzen selbstschneidender Schrauben (24) zum Anbringen der Befestigungsbleche besitzen. Die Wandungen der Halbschalen (1, 2) weisen innenseitig etwa auf halber Höhe einander gegenüberliegende schlitzartige, sich senkrecht zur Wandung und über die gesamte Länge des Gehäuses erstreckende Ausnehmungen (19) auf, in die die Seitenkanten eines Haltebleches (20) für den Luftsack (25) einsteckbar sind. Dabei ist der Luftsack (25) mittels Schrauben (27) mit dem Halteblech (20) verbunden.

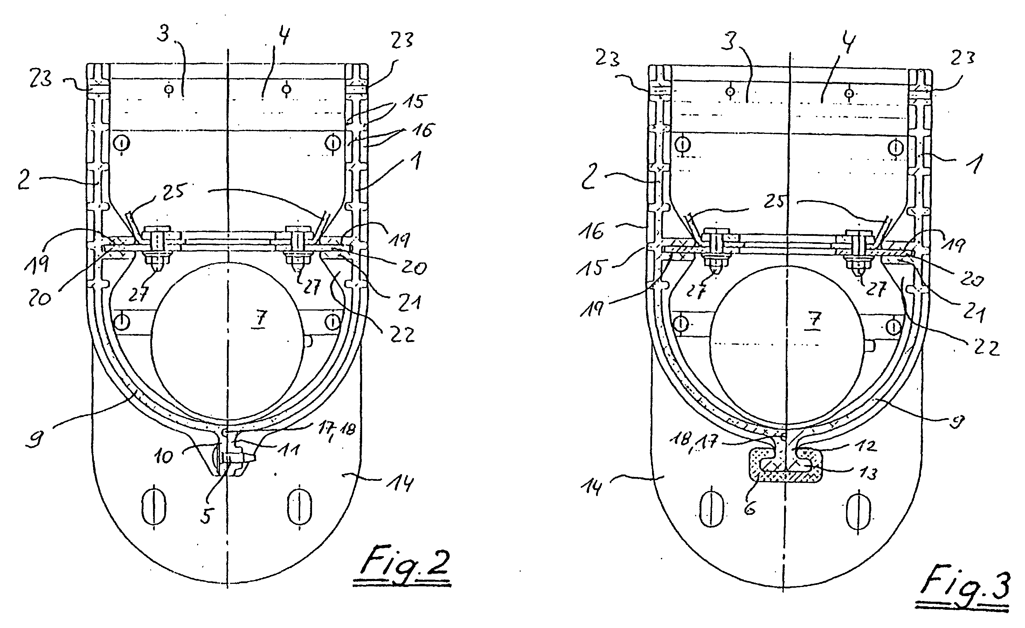

Aus der Schnittdarstellung gem. Fig. 2 und Fig. 3 ergibt sich insbesondere die Form der Rippen (15 und 16) sowie der Rippen (21 und 22), die die Ausnehmung (19) bilden. Die Seitenwandhälften (3 und 4) haben eine Ausnehmung (7) für die Halterung des Gasgenerators (hier nicht dargestellt). Die Halbschalen (1 und 2) sind mittels in die bodenseitige Flansche (10 und 11) eingesetzte selbstschneidende Schrauben (5) sowie über die Befestigungsbleche (14) miteinander verbunden. Zur Zentrierung dienen Noppen (17) und Ausnehmungen (18).

Aus Fig. 2 ergibt sich ferner, daß der Bodenbereich (9) viertelkreisförmig ausgestaltet ist und daß sich am oberen Rand der Halbschalen (1 und 2) umlaufend Löcher zur Befestigung einer Abdeckung befindet.

Fig. 3 unterscheidet sich von Fig. 2 lediglich dadurch, daß anstelle der Schrauben (5) ein Klammerteil (6) zur Verbindung der beiden Halbschalen (1 und 2) vorgesehen ist. Dazu besitzen die Flansche einen sich im wesentlichen parallel zur Teilungsebene des Gehäuses erstreckenden Abschnitt (12) sowie einen davon rechtwinklig nach außen abstehenden Abschnitt (13). Das Klammerstück kann zur Verbindung der beiden Halbschalen (1 und 2) in Längsrichtung über die Flansche geschoben werden. Dabei können zur Materialersparnis mehrere, über die Länge des Gehäuses verteilte Abschnitte eines Klammerprofils verwendet werden. Im übrigen entspricht die Darstellung in Fig. 3 derjenigen in Fig. 2, so daß sich eine Wiederholung der dazu gemachten Erläuterungen erübrigt.

Der Erfindungsgedanke ermöglicht eine einfache und preisgünstige Gestaltung eines Airbag-Gehäuses unter Berücksichtigung der eingangs erwähnten Anforderungen, daß aufgrund des gewählten Formgebungsverfahrens leicht an unterschiedliche Vorgaben anpaßbar ist. Der Materialaufwand läßt sich gegenüber herkömmlichen Konstruktionen erheblich reduzieren, weil es möglich ist, die erforderlichen Wandstärken überall an die örtlichen Festigkeitsbeanspruchungen anzupassen. Diesem Zweck dient auch die Verrippung, mit der überall für die erforderliche Formsteifigkeit und Bruchfestigkeit des Gehäuses gesorgt werden kann. Da bevorzugt Aluminiumlegierungen und Kunststoff verwendet wird, kann das Airbag-Gehäuse nach dem Erfindungsgedanken auch besonders leicht ausgeführt werden, was dem Bestreben nach Gewichtsersparnis bei Kraftfahrzeugen entgegenkommt. Auf der anderen Seite lassen sich die Halbschalen auch für alle funktionellen Anforderungen auslegen.

## Patentansprüche

1. Trogartiges, im Formgießverfahren hergestelltes Gehäuse mit in Längserstreckung gleichbleibendem U-förmigen Querschnitt und stirnseitigen, flachen Seitenwänden zur Aufnahme eines Gasgenerators und eines Luftsacks für eine Beifahrer-Schutzeinrichtung in einem Kraftfahrzeug, mit zwei im wesentlichen spiegelbildlich ausgebildeten Halbschalen (1, 2) mit einstückig angeformten Seitenwandhälften, **dadurch gekennzeichnet, daß** die Halbschalen (1, 2) über an den Seitenwandhälften (3, 4) angebrachte Befestigungsbleche (14) miteinander verbunden sind, die gleichzeitig zur Befestigung des Gehäuses in der Fahrzeugkarosserie dienen, sowie daß weitere Mittel (5) zum Verbinden der beiden Halbschalen (1, 2) vorgesehen sind.

2. Gehäuse nach Anspruch 1, **dadurch gekennzeichnet, daß** an den Seitenwandhälften (3,4) mit Löchern versehene Nocken (26) für das Einsetzen selbstschneidender Schrauben (24) zum Anbringen der Befestigungsbleche (14) vorgesehen sind.

3. Gehäuse nach einem der vorhergehenden Ansprüche, **dadurch gekennzeichnet, daß** an den Halbschalen (1, 2) im bodenseitigen Verbindungsbereich nach außen vorstehende, im montierten Zustand aneinander anliegende Flansche (10, 11) angeformt sind.

4. Gehäuse nach Anspruch 3, **dadurch gekennzeichnet, daß** die Flansche (10, 11) sich im wesentlichen nur parallel zur Teilungsebene des Gehäuses erstrecken und für das Einsetzen selbstschneidender, beide Flansche durchdringender Schrauben (5) ausgebildet sind.

5. Gehäuse nach einem der vorhergehenden Ansprüche, **dadurch gekennzeichnet, daß** die Halbschalen (1, 2) aus einer Aluminiumdruckgußlegierung bestehen.

6. Gehäuse nach einem der Ansprüche 1-4, **dadurch gekennzeichnet, daß** die Halbschalen (1, 2) aus Kunststoff bestehen.

7. Gehäuse nach Anspruch 6, **dadurch gekennzeichnet, daß** die beiden Halbschalen (1, 2) gleichzeitig hergestellt und über ein Filmscharnier im Bereich der bodenseitigen Fügungsfläche miteinander verbunden sind.

8. Gehäuse nach einem der vorhergehenden Ansprüche, **dadurch gekennzeichnet, daß** die Seitenwandhälften (3, 4) Aussparungen (7) für die Halterung eines zylindrischen Gasgenerators (8) aufweisen.

9. Gehäuse nach einem der vorhergehenden Ansprüche, **dadurch gekennzeichnet, daß** die Halbschalen (1, 2) je einen im Querschnitt viertelkreisförmigen Bodenbereich (9) aufweisen.

10. Gehäuse nach einem der vorhergehenden Ansprüche, **dadurch gekennzeichnet, daß** die Wandungen der Halbschalen (1, 2) innen und/oder außen durch ein Raster von Rippen (15, 16) verstärkt sind.

11. Gehäuse nach einem der vorhergehenden Ansprüche, **dadurch gekennzeichnet, daß** die Halbschalen (1, 2) in einer der Fügungsflächen vorspringende Zentrierungsnoppen (17) und in der anderen Fügungsfläche entsprechende Ausnehmungen (18) aufweisen.

12. Gehäuse nach einem der vorhergehenden Ansprüche, **dadurch gekennzeichnet, daß** die Wandungen der Halbschalen (1, 2) innenseitig etwa auf halber Höhe einander gegenüberliegende schlitzartige, sich senkrecht zur Wandung und über die gesamte Länge des Gehäuses erstreckende Ausnehmungen (19) aufweisen, in die die Seitenkanten eines Haltebleches (20) für den Luftsack (25) einsteckbar und ohne sonstige Mittel zu befestigen sind.

13. Gehäuse nach Anspruch 12, **dadurch gekennzeichnet, daß** die Ausnehmungen von zwei nach innen vorstehenden, verlängerten Rippen (21) gebildet werden, die durch senkrecht dazu angeordnete Rippen (22) versteift sind.

14. Gehäuse nach einem der vorhergehenden Ansprüche, **dadurch gekennzeichnet, daß** am oberen Ende der Halbschalen (1, 2) am gesamten Umfang Löcher (23) für das Einsetzen selbstschneidender Schrauben zur Befestigung einer Abdeckung vorgesehen sind.

## Claims

1. A trough-like housing made by casting in a mould, with a constant U-shaped cross-section throughout its length, and with flat side walls at its ends to accommodate a gas generator and an airbag for a front-seat passenger protection device in a motor vehicle, comprising two half shells (1, 2) of substantially mirror-image configuration with integrally moulded side wall halves, **characterized in that** the half shells (1, 2) are joined to one another by fastening plates (14) which are applied to the side wall halves (3, 4) and simultaneously serve for fastening the housing in the vehicle body, and that further means (5) are provided for joining the two half shells (1, 2).

2. The housing according to claim 1, **characterized in that** raised portions (26) provided with holes are provided on the side wall halves (3, 4) for the insertion of self-tapping screws (24) for mounting the fastening plates (14).

3. The housing according to either of the preceding claims, **characterized in that** outwardly projecting flanges (10, 11) which are in contact with one another in the assembled condition are formed integrally with the half shells (1, 2) in the bottom junction area.

4. The housing according to claim 3, **characterized in that** the flanges (10, 11) extend essentially only parallel to the plane of division of the housing and are configured for the insertion of self-tapping screws (5) passing through both flanges.

5. The housing according to any of the preceding claims, **characterized in that** the half shells (1, 2) consist of an aluminium diecasting alloy.

6. The housing according to any of claims 1 to 4, **characterized in that** the half shells (1, 2) consist of plastic.

7. The housing according to claim 6, **characterized in that** the two half shells (1, 2) are made simultaneously and are joined to one another by a film hinge in the area of the bottom junction surface.

8. The housing according to any of the preceding claims, **characterized in that** the side wall halves (3, 4) have recesses (7) for mounting a cylindrical gas generator (8).

9. The housing according to any of the preceding claims, **characterized in that** the half shells (1, 2) each have a bottom portion (9) having a quarter-circular shape in cross-section.

10. The housing according to any of the preceding claims, **characterized in that** the walls of the half shells (1, 2) are reinforced internally and/or externally by a pattern of ribs (15, 16).

11. The housing according to any of the preceding claims, **characterized in that** the half shells (1, 2) have projecting centering bosses (17) in one of the junction surfaces and corresponding recesses (18) in the other junction surface.

12. The housing according to any of the preceding claims, **characterized in that** the walls of the half shells (1, 2) have on the inside, at about half their height, confronting slot-like recesses (19) extending perpendicularly to the wall and over the entire length of the housing, the lateral edges of a holding plate (20) for the airbag (25) being insertable into the recesses (19) and being able to be fastened without any other means.

13. The housing according to claim 12, **characterized in that** the recesses are formed by two inwardly projecting, elongated ribs (21) which are stiffened by ribs (22) disposed perpendicularly thereto.

14. The housing according to any of the preceding claims, **characterized in that** holes (23) are provided at the upper end of the half shells (1, 2) on the entire periphery, for the insertion of self-tapping screws for fastening a cover.

## Revendications

1. Boîtier en forme d'auge réalisé par procédé de moulage, comportant une section transversale en forme de U constante en extension longitudinale et des parois latérales plates sur la face frontale pour recevoir un générateur de gaz et un coussin à gaz pour un dispositif de protection de passager avant dans un véhicule, comportant deux demi-coques (1, 2) réalisées sensiblement symétriques avec des demi-parois latérales moulées d'un seul tenant, **caractérisé en ce que** les demi-coques (1, 2) sont reliées l'une à l'autre par des tôles de fixation (14) montées sur les demi-parois latérales, qui servent en même temps pour la fixation du boîtier dans la carrosserie du véhicule, et **en ce qu'**il est prévu d'autres moyens (5) pour relier les deux demi-coques (1, 2).

2. Boîtier selon la revendication 1, **caractérisé en ce qu'**il est prévu sur les demi-parois latérales (3, 4) des cames (26) pourvues de trous pour insérer des vis (24) autotaraudeuses pour le montage des tôles de fixation (14).

3. Boîtier selon l'une des revendications précédentes, **caractérisé en ce que** des brides (10, 11) faisant saillie vers l'extérieur et en contact l'une avec l'autre à l'état de montage sont moulées sur les demi-coques (1, 2) dans la zone de jonction du fond.

4. Boîtier selon la revendication 3, **caractérisé en ce que** les brides (10, 11) s'étendent sensiblement seulement parallèlement au plan de joint du boîtier et sont réalisées pour l'insertion de vis (5) autotaraudeuses traversant les deux brides.

5. Boîtier selon l'une des revendications précédentes, **caractérisé en ce que** les demi-coques (1, 2) sont en un alliage de coulage d'aluminium sous pression.

6. Boîtier selon l'une des revendications 1 à 4, **caractérisé en ce que** les demi-coques (1, 2) sont en matière plastique.

7. Boîtier selon la revendication 6, **caractérisé en ce que** les deux demi-coques (1, 2) sont réalisées simultanément et sont reliées l'une à l'autre par une charnière à bande dans la zone de la surface de jointure du fond.

8. Boîtier selon l'une des revendications précédentes, **caractérisé en ce que** les demi-parois latérales (3, 4) présentent des évidements (7) pour la fixation d'un générateur de gaz (8) cylindrique.

9. Boîtier selon l'une des revendications précédentes, **caractérisé en ce que** les demi-coques (1, 2) présentent chacune une zone de fond (9) de section transversale en quart de cercle.

10. Boîtier selon l'une des revendications précédentes, **caractérisé en ce que** les parois des demi-coques (1, 2) sont renforcées à l'intérieur et/ou à l'extérieur par un réseau de nervures (15, 16).

11. Boîtier selon l'une des revendications précédentes, **caractérisé en ce que** les demi-coques (1, 2) présentent des bosses de centrage (17) en saillie, dans une des surfaces de jointure, et des évidements (18) correspondants dans l'autre surface de jointure.

12. Boîtier selon l'une des revendications précédentes, **caractérisé en ce que** les parois des demi-coques (1, 2) présentent à l'intérieur, approximativement à mi-hauteur, des évidements (19) en forme de fentes, opposés les uns aux autres, qui s'étendent perpendiculairement à la paroi et sur toute la longueur du boîtier, les arêtes latérales d'une plaque de retenue (20) pour un coussin à gaz (25) pouvant être enfichées dans les évidements (19) et étant susceptibles d'être fixées sans autre moyen.

13. Boîtier selon la revendication 14, **caractérisé en ce que** les évidements sont formés par deux nervures (21) prolongées faisant saillie vers l'intérieur, qui sont rigidifiées par des nervures (22) agencées perpendiculairement à celles-ci.

14. Boîtier selon l'une des revendications précédentes, **caractérisé en ce qu'**à l'extrémité supérieure des demi-coques (1, 2), il est prévu sur toute la périphérie des trous (23) pour insérer des vis autotaraudeuses pour la fixation d'un couvercle.
